# FASCICULE DE BREVET EUROPEEN

(11) **EP 4 515 092 B1**
(45) Date de publication et mention de la délivrance du brevet: **01.04.2026**
(21) Numéro de dépôt: 23709258.0
(22) Date de dépôt: 16.02.2023
(51) Int. Cl.: F02C 6/00, F02C 6/20, F02C 7/10, F02C 7/143

(54) **PROCEDE DE PILOTAGE D'UN SYSTEME THERMODYNAMIQUE**
VERFAHREN ZUR STEUERUNG EINES THERMODYNAMISCHEN SYSTEMS
METHOD FOR CONTROLLING A THERMODYNAMIC SYSTEM

(30) Priorité: 25.04.2022 FR 2203792
(43) Date de publication de la demande: 05.03.2025
(73) Titulaire: Stellantis Auto SAS, 78300 Poissy (FR)
(72) Inventeur: BOU NADER, Wissam, 91120 PALAISEAU (FR); DUMAND, Clement, 91300 MASSY (FR)
(74) Mandataire: PSIP
(86) Numéro de dépôt international: PCT/FR2023/050217
(87) Numéro de publication internationale: WO 2023/209297

(56) Documents cités:
- FR-A1- 3 095 007
- FR-A1- 3 120 251
- US-A- 5 497 615
- US-A1- 2012 324 903

## Description

L'invention se rapporte au domaine des procédés de pilotage, ou procédés de commande, de systèmes thermodynamiques à cycle turbine à gaz avec compression refroidie, régénération et réchauffe intermédiaire durant la détente, du type turbomachine.

Les convertisseurs d'énergie de type turbine à gaz sont actuellement étudiés pour les chaînes de traction fortement électrifiées, notamment celles qu'on appelle prolongateur d'autonomie (« Range Extender ») dans les véhicules hybrides de série. Un tel convertisseur opère en tant qu'Unité de Puissance Auxiliaire (de l'anglais « Auxiliary Power Unit », soit APU) où son rôle est de recharger les batteries d'un véhicule électrique. Il est ainsi mécaniquement découplé de la chaîne de traction et fonctionne ainsi sur son point de rendement maximal.

En particulier, un système thermodynamique à cycle de type turbine à gaz avec compression refroidie, régénération et réchauffe durant la détente (soit un dispositif appelé en anglais « Intercooled Recuperative Reheat Gas Turbine », ou IRReGT) est un dispositif à fort potentiel pour les applications automobiles. Ce cycle permet d'atteindre un rendement très important mais aussi une densité de puissance très élevée (c'est-à-dire un travail net spécifique élevé, en anglais « Net Specific Work »).

En outre, l'état de la technique est connu des documents US2012324903A1, FR3095007A1 et US5497615A.

L'objectif de la présente demande est de proposer des stratégies de pilotage, c'est-à-dire des procédés de pilotage, d'un système thermodynamique du type « Intercooled Recuperative Reheat Gas Turbine » précité présentant deux étages de turbocompresseurs électrifiés séparés. Ces procédés doivent permettre d'optimiser le fonctionnement et de piloter la machine durant ses phases de fonctionnement.

L'invention propose ainsi un procédé de pilotage d'un système thermodynamique pour véhicule automobile, le système comprenant :
- un premier turbocompresseur comprenant une machine électrique formant moteur-générateur, un premier compresseur et une première turbine ;
- un deuxième turbocompresseur comprenant un deuxième compresseur et une deuxième turbine ;
- deux chambres de combustion ;
- un refroidisseur de flux connecté au premier compresseur et au deuxième compresseur ;
- un récupérateur thermique connecté au deuxième compresseur et à une première chambre de combustion, elle-même étant connectée à la deuxième turbine, elle-même étant connectée à la deuxième chambre de combustion, elle-même étant connectée à la première turbine ;

le système étant configuré pour mettre en œuvre un flux de fluide entre les différents éléments ;
le procédé comportant successivement :
   - une étape d'activation de la machine électrique, jusqu'à l'atteinte d'un régime moteur minimal (régime où la machine électrique respective pourra basculer du mode moteur au mode générateur) respectif pour chacun parmi les premier et deuxième turbocompresseurs ;
   - une étape d'injection et de combustion de carburant dans la deuxième chambre de combustion jusqu'à l'atteinte, par la température en entrée de la première turbine, d'une température minimale α prédéterminée ;
   - une étape d'augmentation de la température en entrée de la deuxième turbine et du récupérateur thermique jusqu'au basculement de la machine électrique en mode générateur et à l'atteinte par la température en sortie du récupérateur en direction de la première chambre de combustion, d'au moins une température minimale prédéterminée ;
   - une étape d'injection de carburant dans la première chambre de combustion.

Ce procédé permet d'optimiser le fonctionnement du système thermodynamique au démarrage qui est la phase la plus polluante. On optimise ainsi les caractéristiques du débit d'air avant d'initier l'injection, dans la deuxième chambre de combustion, permettant ainsi de faire monter rapidement en température le système thermodynamique, d'en minimiser les émissions de polluants, par exemple gazeux, et d'optimiser le rendement du système thermodynamique dès la phase de démarrage.

En outre, le franchissement du seuil de température exigé (la température minimale α prédéterminée) en entrée de la première turbine, et l'augmentation du débit de carburant en entrée de celle-ci, permettent à celle-ci de générer plus de puissance que le premier compresseur n'en consomme, donc de faire basculer la machine électrique correspondante en mode générateur.

De plus, l'atteinte de cette température en sortie du récupérateur en direction de la première chambre de combustion, d'au moins une température minimale prédéterminée permet de passer à l'étape suivante, donc de démarrer une combustion lorsque la première chambre de combustion est déjà chaude et de faire en sorte de réduire encore les émissions de polluants.

Avantageusement, l'étape d'injection de carburant dans la première chambre de combustion comporte une sous-étape d'activation du refroidisseur de flux.

Le fait de retarder l'activation du refroidisseur de flux jusqu'à l'étape d'injection de carburant dans la première chambre de combustion, elle-même postérieure à l'étape d'injection de carburant dans la deuxième chambre de combustion, permet au système de monter en température avant de faire augmenter la densité de l'air entrant dans le deuxième compresseur sous l'effet du refroidissement dans le refroidisseur de flux. Ceci permet avantageusement au récupérateur thermique de monter rapidement en température, dès le démarrage du système.

Alternativement, l'étape d'activation de la machine électrique comporte une sous-étape d'activation du refroidisseur de flux.

Avantageusement, l'étape d'injection de carburant dans la première chambre de combustion est suivie d'une étape d'ajustement des paramètres au cours de laquelle les températures en entrée de la première turbine et de la deuxième turbine sont contrôlées par action sur la quantité de carburant injectée dans la deuxième chambre de combustion et dans la première chambre de combustion respectivement, et/ou par régulation de la température en sortie du refroidisseur de flux par le refroidisseur de flux.

Procéder ainsi permet d'optimiser le fonctionnement général du système thermodynamique en fin de phase de démarrage et au début de la phase de fonctionnement stabilisé de celle-ci.

Avantageusement, un réchauffeur électrique est respectivement disposé en amont d'au moins une chambre de combustion parmi la première chambre de combustion et la deuxième chambre de combustion, de préférence un réchauffeur électrique est respectivement disposé en amont d'au moins la deuxième chambre de combustion, et, le procédé comporte au moins une sous-étape de réchauffement du flux gazeux entrant dans l'au moins une chambre de combustion avant l'étape d'injection de carburant dans la deuxième chambre de combustion et/ou avant l'étape d'injection de carburant dans la première chambre de combustion.

L'invention porte également sur un système thermodynamique comprenant :
- un premier turbocompresseur comprenant une machine électrique formant moteur-générateur, un premier compresseur et une première turbine,
- un deuxième turbocompresseur comprenant un deuxième compresseur et une deuxième turbine,
- deux chambres de combustion,
- un refroidisseur de flux connecté au premier compresseur et au deuxième compresseur,
- un récupérateur thermique connecté au deuxième compresseur et à une première chambre de combustion, elle-même étant connectée à la deuxième turbine, elle-même étant connectée à la deuxième chambre de combustion, elle-même étant connectée à la première turbine,
le système étant configuré pour mettre en œuvre un flux de fluide entre les différents éléments, caractérisé en ce qu'il comprend un dispositif de contrôle configuré pour contrôler le système thermodynamique selon les étapes du procédé de l'invention.

Avantageusement, le deuxième compresseur et la deuxième turbine ainsi que le premier compresseur et la première turbine sont montés sur l'axe de la machine électrique formant moteur-générateur.

Avantageusement et en variante, la machine électrique formant moteur-générateur est une première machine électrique formant moteur-générateur, le premier compresseur et la première turbine étant montés sur un axe de la première machine électrique formant moteur-générateur, et en ce que le deuxième turbocompresseur comporte une deuxième machine électrique formant moteur-générateur, laquelle comporte un axe sur lequel sont montés le deuxième compresseur et la deuxième turbine.

L'invention porte également sur un véhicule automobile comportant un système thermodynamique tel que cité ci-dessus.

L'invention sera davantage comprise à la lecture de la description détaillée de modes de réalisation non limitatifs, et sur la base des figures annexées illustrant des variantes de l'invention, dans lesquelles :
- [Fig.1] est un schéma fonctionnel d'un exemple de système thermodynamique à double étage, de type IRReGT (Intercooled Recuperative Reheat Gas Turbine);
- [Fig.2] est une représentation schématique d'un circuit de production et de stockage d'énergie électrique dans un véhicule de type hybride ;
- [Fig.3] est un schéma fonctionnel du système thermodynamique à double étage de la Figure 1, montrant en plus l'implantation de capteurs de pression et de température dans le système, ainsi que deux réchauffeurs électriques optionnels ;
- [Fig.4] est un ordinogramme des étapes d'une phase de démarrage du système thermodynamique de la figure 1, c'est-à-dire dépourvu de réchauffeur électrique ;
- [Fig.5] est un ordinogramme des étapes d'une phase de démarrage du système thermodynamique de la figure 3, c'est-à-dire avec mise en œuvre de réchauffeurs électriques.

L'invention concerne un procédé de pilotage d'un système thermodynamique à cycle turbine à gaz avec compression refroidie, régénérateur et réchauffe durant la détente (IRReGT), par exemple une turbomachine. L'invention concerne en particulier des applications du procédé dans un tel système thermodynamique prévu dans un véhicule automobile.

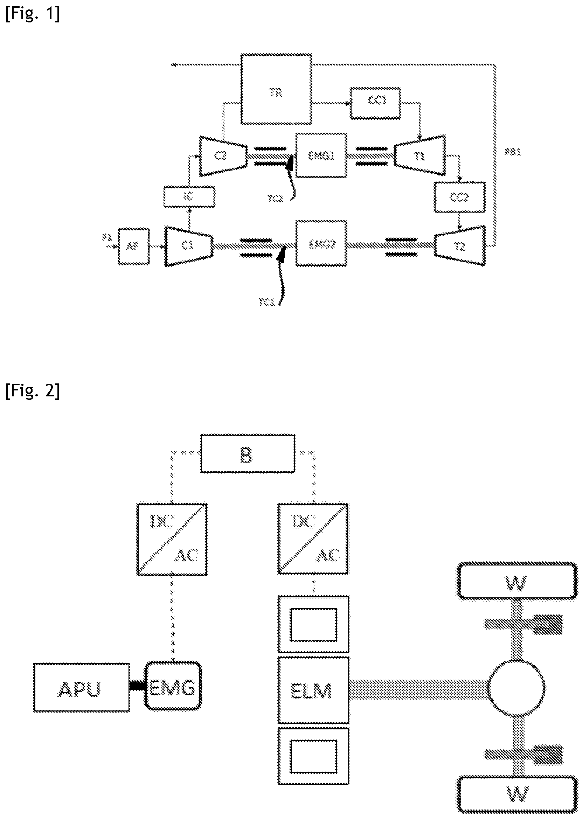

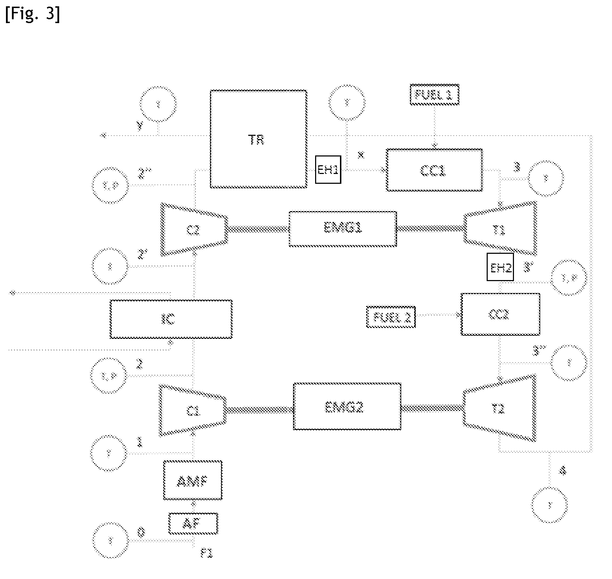

En référence à la Fig. 2, on décrit ici un exemple d'intégration d'un tel système thermodynamique à cycle turbine à gaz dans un véhicule de type hybride, et plus précisément au sein d'un circuit de production et de stockage d'énergie électrique de ce véhicule. Un tel système thermodynamique peut notamment fonctionner en tant qu'unité auxiliaire de puissance (APU). Lorsque ce système thermodynamique opère en tant qu'unité auxiliaire de puissance selon un fonctionnement stabilisé, elle recharge la ou les batterie(s) principales B du véhicule par l'intermédiaire de ses machines électriques (EMG en Fig. 2, ou plus spécifiquement EMG1 et EMG2 en Fig. 1 et 3). La batterie est reliée par des convertisseurs d'énergie électrique courant alternatif-courant continu (blocs DC-AC en Fig. 2) d'une part au système thermodynamique en tant qu'APU, d'autre part au moteur électrique d'entraînement ELM du véhicule. Une chaîne d'entraînement de type connu relie ensuite le moteur électrique principal aux roues W du véhicule.

On détaille ensuite un système thermodynamique du type à cycle turbine à gaz précité en référence aux Fig. 1 et 3.

Un tel système thermodynamique comprend un premier turbocompresseur TC1 et un deuxième turbocompresseur TC2.

Le premier turbocompresseur TC1 comprend un premier compresseur C1 et une première turbine T2.

Le deuxième turbocompresseur TC2 comprend un deuxième compresseur C2 et une deuxième turbine T1.

Plus particulièrement, le premier turbocompresseur forme un étage « basse pression », et le deuxième turbocompresseur forme un étage « haute pression »

Les turbocompresseurs sont ici électrifiés, c'est-à-dire qu'ils comportent chacun une machine électrique EMG1, EMG2 opérant à la fois en mode moteur et générateur, c'est-à-dire en tant que moteur pour entraîner et démarrer le système ; et en tant que générateur pour récupérer l'énergie produite par combustion.

Le système thermodynamique comprend en outre deux chambres de combustion CC1 et CC2, et un refroidisseur de flux IC (également appelé échangeur air/air, ou échangeur air/eau, ou en anglais « intercooler »).

Le refroidisseur de flux IC est connecté au premier compresseur C1 et au deuxième compresseur C2.

Le système thermodynamique comprend en outre un récupérateur thermique TR (ou échangeur thermique). Le récupérateur thermique TR est ici connecté au deuxième compresseur C2 en amont et à une première chambre de combustion CC1 en avant. La première chambre de combustion CC1 est ensuite connectée à la deuxième turbine T1.

La deuxième chambre de combustion CC2 est connectée aux deux turbines, à savoir en particulier à la deuxième turbine T1 en amont et à la première turbine T2 en aval.

Le système thermodynamique comprend en outre une branche de récupération RB1 connectant la première turbine T2 au récupérateur thermique TR et le traversant. Le côté du récupérateur TR traversé par la branche de récupération RB1 est appelé le côté chaud du récupérateur, puisque le flux de gaz provient directement de la première turbine T2 après avoir subi une deuxième combustion dans la chambre de combustion CC2. Par opposition, le côté du récupérateur TR auquel parvient l'air comprimé depuis le compresseur C2, et à partir duquel l'air est dirigé vers la première chambre de combustion CC1 est appelé le côté froid du récupérateur.

Le système thermodynamique est configuré pour être parcouru par un flux gazeux F1, décrit plus loin, entre les différents éléments le composant.

L'utilisation d'une deuxième chambre de combustion CC2 (pour réchauffe, de l'anglais « reheat ») entre les turbines permet d'augmenter la densité de puissance, ce qui permet de réduire le débit d'air requis à puissance identique et de réduire la taille du dispositif.

Dans le mode de réalisation illustré en Fig. 3, le système est équipé d'un filtre à air AF et d'un débitmètre d'air AMF (de l'anglais « Air Mass Flow » meter).

Le système est aussi équipé d'un système d'injection de carburant dans la première chambre de combustion FUEL 1 et d'un système d'injection de carburant dans la deuxième chambre de combustion FUEL 2.

Pour contrôler le fonctionnement du système thermodynamique il est prévu un dispositif de contrôle configuré pour contrôler le système thermodynamique selon les étapes du procédé de pilotage de l'invention. Le dispositif de contrôle comprend les moyens d'acquisition, de traitement par instructions logicielles stockées dans une mémoire ainsi que les moyens de commande requis à la mise en œuvre les étapes du procédé de pilotage de l'invention. Différents capteurs de pression P et capteurs de température T peuvent être mis en œuvre en différents emplacements. Les capteurs de température sont de préférence des thermocouples. Ces emplacements sont présentés par des lettres ou chiffres et correspondent aux endroits suivants :
0 : entrée du filtre à air
1 : sortie du filtre à air / entrée du premier compresseur C1
2 : sortie du compresseur C1 / entrée du refroidisseur de flux IC
2' : sortie du refroidisseur IC / entrée du deuxième compresseur C2
2" : sortie du compresseur C2 / entrée du récupérateur du côté froid
x : sortie du récupérateur du côté froid / entrée de la première chambre de combustion CC1
3 : sortie de la chambre de combustion CC1 / entrée de la deuxième turbine T1
3' : sortie de la turbine T1 / entrée de la deuxième chambre de combustion CC2
3" : sortie de la chambre de combustion CC2 / entrée de la première turbine T2
4 : sortie de la première turbine T2 / entrée du récupérateur du côté chaud (c'est-à-dire situé sur la branche de récupération de chaleur RB1)
y : sortie du récupérateur vers l'air ambiant

Ci-après, selon les besoins, les valeurs mesurées seront désignées par la lettre de l'unité mesurée et le symbole, en indice afin de les distinguer des désignations des turbines T1 et T2, de l'emplacement de mesure de cette valeur. Par exemple, les mesures des températures en x ou en 3" seront notées Tₓ et T_{3"}.

Dans le mode de réalisation illustré en Fig. 3, le système thermodynamique comporte en outre un premier réchauffeur électrique EH1 et un deuxième réchauffeur électrique EH2, chacun optionnel. Le premier réchauffeur électrique EH1 est ici disposé en sortie du côté froid du récupérateur TR. Ainsi, la mesure de la température Tₓ est-elle alors par exemple faite en aval du premier réchauffeur électrique EH1, c'est-à-dire également en entrée de la première chambre de combustion CC1 et non directement en sortie du côté froid du récupérateur TR. Le deuxième réchauffeur électrique EH2 est quant à lui disposé ici entre la sortie de la deuxième turbine T1 et la deuxième chambre de combustion CC2.

En variante non illustrée, le système peut ne comporter qu'un seul réchauffeur électrique, par exemple le premier réchauffeur électrique EH1 seul, ou le deuxième réchauffeur électrique EH2 seul.

On décrit maintenant le flux gazeux F1 dans le système.

D'une manière générale, le flux gazeux F1 suit les flèches illustrées en Fig. 1 et 3 qui joignent les différents composants et traverse ces composants. De l'air ambiant est tout d'abord aspiré dans le filtre à air AF par le compresseur C1. Cet air passe ensuite à travers le débitmètre AMF et entre dans le compresseur C1. L'air y est comprimé avant de pénétrer dans le refroidisseur de flux IC où il est refroidi. En sortie de refroidisseur, la température de l'air T_{2'} atteint une température entre 45 et 60°C en fonction de la température externe (et en fonction de l'efficacité de refroidissement dans le refroidisseur de flux). Il entre ensuite dans le compresseur C2 où il est comprimé une deuxième fois avant de pénétrer dans le récupérateur TR, plus précisément du côté froid du récupérateur. Dans le récupérateur TR, l'air est préchauffé par les gaz chauds de la branche de récupération RB1 provenant de la sortie de la turbine T2. L'air sortant du récupérateur TR entre ainsi dans la première chambre de combustion CC1. En sortie de la première chambre de combustion CC1, une première détente se produit dans la turbine hautepression T1 puis une phase de réchauffe dans la deuxième chambre de combustion CC2 avant d'entrer dans la première turbine T2 pour subir une deuxième expansion. En sortie de la première turbine, les gaz chauds entrent dans le côté chaud du récupérateur TR pour préchauffer l'air en provenance du deuxième compresseur C2, c'est-à-dire du côté froid du récupérateur TR.

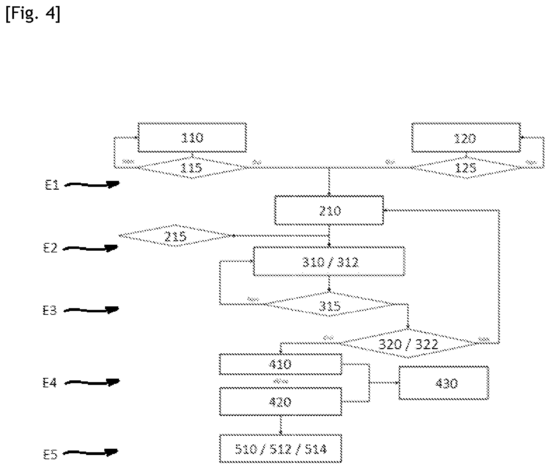

On décrit maintenant en référence à la Fig. 4 un exemple de procédé de pilotage du système thermodynamique qui correspond à une phase de démarrage à froid.

Durant cette phase, tous les composants de la machine sont froids. Ce procédé de démarrage du système thermodynamique en permet une montée en température rapide, ce qui permet de réduire au maximum les émissions de polluants.

### Etape 1 (E1) : Activation des machines électriques EMG1 et EMG2.

On met en rotation les deux machines électriques EMG1 (110) et EMG2 (120), correspondant respectivement à l'étage basse pression et à l'étage haute pression du système thermodynamique. A ce stade, les machines électriques EMG1 et EMG2 sont en mode moteur, c'est-à-dire qu'elles sont alimentées par du courant provenant de la batterie pour pouvoir entraîner en rotation les turbines T1, T2 et les compresseurs C1, C2. En outre, aucune injection de carburant n'est effectuée à ce stade.

Une fois que le régime de rotation RPM1 et RPM2 respectif des deux machines électriques EMG1 et EMG2 atteint des valeurs de consigne R1 et R2 (conditions 115 et 125), l'étape 2 est engagée.

### Etape 2 (E2) : Injection et combustion de carburant dans la chambre de combustion basse pression CC2

Dans cette phase, du carburant est injecté dans la deuxième chambre de combustion CC2 (210). L'injection de carburant permet d'augmenter la température T_{3"} en entrée de la turbine T2 et la température dans le récupérateur TR.

Les machines électriques EMG1 et EMG2 sont à ce stade toujours en mode moteur. Aucune injection n'est effectuée à ce stade dans la première chambre de combustion CC1.

On contrôle la température T_{3"} pour qu'elle reste inférieure à une température maximale de consigne C, soit T_{3"} < C (conditions 215). Cela évite avantageusement que la température de la turbine T2 n'excède la limite de résistance des matériaux qui la composent. Cette température T_{3"} est contrôlée par la quantité de carburant injectée dans la deuxième chambre de combustion CC2.

### Etape 3 (E3) : Augmentation de la température en entrée de la deuxième turbine T1 et du récupérateur TR

Au cours de cette étape, l'injection de carburant dans la chambre de combustion CC2 se poursuit et on s'assure que la température T_{3"} en entrée de la première turbine T2 augmente (310) jusqu'à atteindre ou dépasser une température seuil α prédéterminée (condition 315), tout en restant inférieure à la température maximale de consigne C (condition 215). L'augmentation de la température T_{3"} va permettre à la turbine T2 de générer plus de puissance que le premier compresseur C1 ce qui permet de faire basculer la première machine électrique EMG2 en mode générateur. En d'autres termes, l'énergie mécanique produite par la turbine 2 permet alors à la première machine électrique EMG2 de générer un courant pour recharger la batterie principale B. A ce stade, aucune injection n'est encore effectuée dans la première chambre de combustion CC1.

Avec l'échauffement du flux en entrée de la turbine T2, la température T₄ du récupérateur thermique TR, c'est-à-dire du côté chaud de celui-ci, monte également par l'intermédiaire de la branche RB1 (312). Un transfert thermique croissant se fait du côté chaud vers le côté froid du récupérateur TR.

Lorsque la condition de fonctionnement de la première machine électrique EMG2 en mode générateur est remplie (condition 320) et lorsqu'une température Tₓ en sortie du récupérateur TR, c'est-à-dire en entrée de la première chambre de combustion CC1, atteint ou dépasse une température de consigne B (condition 322), le procédé se poursuit avec l'étape 4 d'injection. L'atteinte de cette température permet que la combustion dans la première chambre de combustion CC1 puisse être initiée à chaud, ce qui permet donc de réduire les émissions de polluants.

### Etape 4 (E4) : Injection de carburant dans la première chambre de combustion CC1 (et refroidissement du flux gazeux F1 par le refroidisseur de flux IC)

Au cours de cette étape, on injecte également du carburant dans la première chambre de combustion CC1 (410).

De préférence, mais non limitativement, le circuit de refroidissement du refroidisseur de flux IC est également activé à l'étape 4 (420). En variante, ce circuit de refroidissement est activé à un autre moment du cycle, par exemple dès l'étape 1, c'est-à-dire dès le démarrage du système thermodynamique. Une activation retardée du refroidisseur de flux IC jusqu'à l'étape 4 est toutefois préféré de sorte que le récupérateur TR puisse monter plus rapidement en température de manière à ce que le flux gazeux F1 entrant dans la première chambre de combustion CC1 chauffe plus vite, réduisant ainsi l'émission de polluants plus rapidement.

On contrôle le fonctionnement du système thermodynamique jusqu'à ce que la puissance de la turbine haute pression, c'est-à-dire la deuxième turbine T1, dépasse la puissance requise par le deuxième compresseur C2, et donc que la deuxième machine électrique EMG1 bascule également en mode générateur (430). Ainsi, à ce stade, une injection de carburant est effectuée à la fois dans la première et dans la deuxième chambre de combustion CC1 et CC2. En outre, les deux machines électriques EMG1 et EMG2 fonctionnent désormais en mode générateur.

### Etape 5 (E5) : Contrôle, ou ajustement, des paramètres

Au cours de cette étape, on contrôle les températures en entrée de la première turbine T2 (T_{3"}, contrôle 512) et de la deuxième turbine T1 (T₃, contrôle 510) en agissant sur la quantité de carburant injectée. Alternativement ou cumulativement, la température T_{2'} du flux gazeux F1 en sortie du refroidisseur de flux IC est régulée par le refroidisseur de flux IC luimême (contrôle 514).

Selon que le procédé décrit ci-dessus est mis en œuvre pour un démarrage à froid, c'est-à-dire après avoir refroidi jusqu'à la température ambiante, ou pour un démarrage à chaud, c'est-à-dire une interruption du fonctionnement du système thermodynamique après un cycle de fonctionnement antérieur au cours duquel ses composants seront montés en température, le temps nécessaire à l'atteinte des température minimales α et B différera. La chronologie des actions à partir de l'étape 1 reste néanmoins la même.

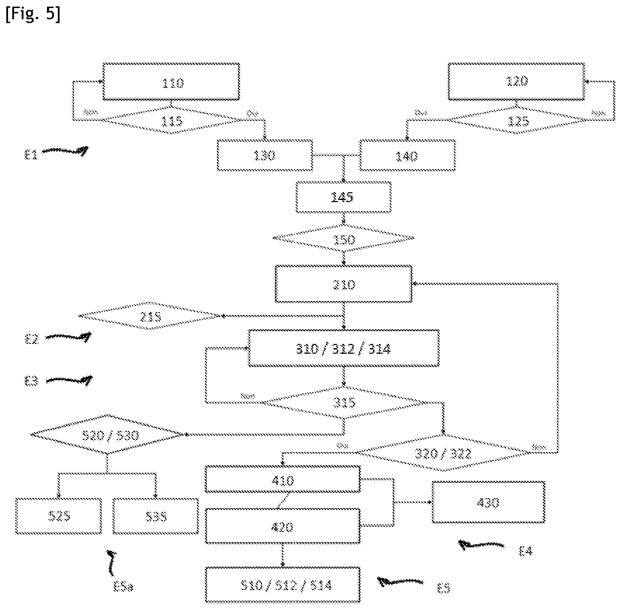

En référence à la Fig. 5, une sous-étape optionnelle (E5a) d'utilisation de réchauffeurs électriques tels que les réchauffeurs EH1 et EH2 illustrés en Fig. 3 est maintenant décrite.

La mise en œuvre d'une sous-étape d'activation d'un réchauffeur électrique, par exemple par le réchauffeur électrique EH1 en amont de la chambre de combustion CC1 (145), ou, par le réchauffeur électrique EH2 en amont de la chambre de combustion CC2, voir schéma de la Fig. 3, permet de réchauffer le flux gazeux F1 entrant dans la chambre de combustion concernée avant d'y injecter du carburant lors des sous-étapes 210, respectivement 410. Dès lors, il devient possible de démarrer à chaud la chambre de combustion concernée. En outre, puisque le flux gazeux retourne au récupérateur thermique TR par la branche de récupération RB1, une partie de l'énergie du flux gazeux est récupérée dans le récupérateur TR, ce qui permet d'amorcer encore plus rapidement la montée en température du récupérateur.

L'énergie d'alimentation du réchauffeur électrique EH1 et/ou EH2, est tirée de la batterie de la voiture. Cette phase ne dure cependant que le temps de réchauffe, c'est-à-dire dure un temps inférieur à 3 minutes, de préférence moins de 2 minutes (en fonction de la puissance de la résistance électrique et surtout en fonction de la masse des pièces à chauffer/de leur inertie thermique). Le temps de réchauffe dépend de la puissance de la résistance électrique et de l'inertie des pièces du système thermodynamique dans son ensemble.

Dans l'exemple illustré, le dépassement d'une température seuil par la température mesurée T_{3'} en entrée de la chambre de combustion CC2 grâce à l'activation de l'un (145) et/ou l'autre (314) des réchauffeurs électriques EH2 et EH1 peut servir de condition préalable supplémentaire, optionnelle, au démarrage de l'étape d'injection dans l'une et/ou l'autre des chambres de combustion CC2 et CC1 (voir Fig. 5).

Enfin, lorsque l'une et/ou l'autre des températures T_{EH1} et T_{EH2} au niveau des réchauffeurs électriques EH1 et EH2 dépasse une température seuil D1 (520), respectivement D2 (530), il est possible de désactiver les réchauffeurs électriques EH1 et EH2 (525 et 535 en Fig. 5).

Un autre objet de l'invention concerne un véhicule automobile configuré pour pouvoir mettre en œuvre le procédé de pilotage, décrit ci-dessus, d'un système thermodynamique.

Il s'agit par exemple d'un véhicule à chaîne de traction type hybride de série (ou prolongateur d'autonomie), dans lequel le système thermodynamique est configuré pour recharger la ou les batterie(s) d'entraînement du véhicule. Ce véhicule électrique est équipé d'un convertisseur d'énergie sous la forme d'un système thermodynamique du type décrit précédemment fonctionnant en mode APU (Auxiliary Power Unit), pour recharger la batterie d'entraînement.

En variante structurelle non illustrée, le couplage des composants au sein du système thermodynamique peut différer. Par exemple, la première turbine T2 peut être montée sur l'arbre commun au deuxième compresseur C2 et à la deuxième machine électrique EMG1, c'est-à-dire que le compresseur haute pression est relié mécaniquement à la turbine basse pression. Inversement, la deuxième turbine T1 est alors montée sur l'arbre commun au premier compresseur C1 et à la première machine électrique EMG2, c'est-à-dire que le compresseur basse pression est relié mécaniquement à la turbine haute pression. Le procédé de pilotage sera le même à ceci près que l'ordre de basculement en mode générateur des machines électriques sera inversé puisque la turbine basse pression, c'est-à-dire celle bénéficiant de la combustion engagée en premier, est alors en quelque sorte disposée dans l'autre turbocompresseur.

En variante non illustrée, les deux turbocompresseurs comportent une machine électrique formant moteur générateur commune. En d'autres termes, les deux turbines et les deux compresseurs sont montés sur un même axe mobile en rotation de la machine électrique commune. Les stratégies de contrôle resteront alors les mêmes. Cette structure permet avantageusement une économie en termes de masse, grâce à la suppression d'une des machines électriques du mode de réalisation représenté sur les figures.

## Revendications

1. Procédé de pilotage d'un système thermodynamique pour véhicule automobile,
le système comprenant :
- un premier turbocompresseur (TC1) comprenant une machine électrique formant moteur-générateur (EMG2), un premier compresseur (C1) et une première turbine (T2) ;
- un deuxième turbocompresseur (TC2) comprenant un deuxième compresseur (C2) et une deuxième turbine (T1) ;
- deux chambres de combustion (CC1, CC2) ;
- un refroidisseur (IC) de flux connecté au premier compresseur (C1) et au deuxième compresseur (C2) ;
- un récupérateur thermique (TR) connecté au deuxième compresseur (C2) et à une première chambre de combustion (CC1), elle-même étant connectée à la deuxième turbine (T1), elle-même étant connectée à la deuxième chambre de combustion (CC2), elle-même étant connectée à la première turbine (T2) ;
le système étant configuré pour mettre en œuvre un flux de fluide (F1) entre les différents éléments ;
le procédé comportant successivement :
- une étape d'activation (E1) de la machine électrique (EMG2), jusqu'à l'atteinte d'un régime moteur minimal respectif (RPM2) pour chacun parmi le premier et le deuxième turbocompresseurs (TC1, TC2) ;
- une étape d'injection (E2) et de combustion de carburant dans la deuxième chambre de combustion (CC2) jusqu'à l'atteinte par la température T3'' en entrée de la première turbine (T2), d'une température minimale α prédéterminée (315) ;
- une étape d'augmentation (E3) de la température en entrée de la deuxième turbine (T1) et du récupérateur thermique (TR) jusqu'au basculement de la machine électrique (EMG2) en mode générateur (320) et à l'atteinte par la température Tx en sortie du récupérateur (TR) en direction de la première chambre de combustion (CC1), d'au moins une température minimale B prédéterminée (322) ;
- une étape d'injection (E4) de carburant dans la première chambre de combustion (CC1).

2. Procédé de pilotage selon la revendication 1, **caractérisé en ce que** l'étape d'injection (E4) de carburant dans la première chambre de combustion (CC1) comporte une sous-étape d'activation (420) du refroidisseur de flux (IC).

3. Procédé de pilotage selon la revendication 1, **caractérisé en ce que** l'étape d'activation (E1) de la machine électrique (EMG2) comporte une sous-étape d'activation du refroidisseur de flux (IC).

4. Procédé de pilotage selon l'une des revendications 1 à 3, **caractérisé en ce que** l'étape d'injection (E4) de carburant dans la première chambre de combustion (CC1) est suivie d'une étape d'ajustement (E5) des paramètres au cours de laquelle les températures (T3", T3) en entrée de la première turbine (T2) et de la deuxième turbine (T1) sont contrôlées par action sur la quantité de carburant injectée (FUEL 2, FUEL 1) dans la deuxième chambre de combustion (CC2) et dans la première chambre de combustion (CC1) respectivement, et/ou par régulation de la température (T2') en sortie du refroidisseur de flux (IC) par le refroidisseur de flux (IC).

5. Procédé de pilotage selon l'une des revendications 1 à 4, **caractérisé en ce qu'**un réchauffeur électrique (EH1, EH2) est respectivement disposé en amont d'au moins une chambre de combustion (CC1, CC2) parmi la première chambre de combustion (CC1) et la deuxième chambre de combustion (CC2), de préférence un réchauffeur électrique (EH2) est respectivement disposé en amont d'au moins la deuxième chambre de combustion (CC2),
le procédé comportant au moins une sous-étape (145 ; 314) de réchauffement du flux gazeux (F1) entrant dans l'au moins une chambre de combustion (CC2, CC1) avant l'étape d'injection (E2) de carburant dans la deuxième chambre de combustion (CC2) et/ou avant l'étape d'injection (E4) de carburant dans la première chambre de combustion (CC1).

6. Système thermodynamique comprenant :
- un premier turbocompresseur (TC1) comprenant une machine électrique formant moteur-générateur (EMG2), un premier compresseur (C1) et une première turbine (T2),
- un deuxième turbocompresseur (TC2) comprenant un deuxième compresseur (C2) et une deuxième turbine (T1),
- deux chambres de combustion (CC1, CC2),
- un refroidisseur (IC) de flux connecté au premier compresseur (C1) et au deuxième compresseur (C2),
- un récupérateur thermique (TR) connecté au deuxième compresseur (C2) et à une première chambre de combustion (CC1), elle-même étant connectée à la deuxième turbine (T1), elle-même étant connectée à la deuxième chambre de combustion (CC2), elle-même étant connectée à la première turbine (T2),
le système étant configuré pour mettre en œuvre un flux de fluide (F1) entre les différents éléments, **caractérisé en ce qu'**il comprend un dispositif de contrôle configuré pour contrôler le système thermodynamique selon les étapes du procédé selon l'une des revendication 1 à 5.

7. Système thermodynamique selon la revendication 6, **caractérisé en ce que** le deuxième compresseur (C2) et la deuxième turbine (T1) ainsi que le premier compresseur (C1) et la première turbine (T2) sont montés sur l'axe de la machine électrique formant moteur-générateur (EMG2).

8. Système thermodynamique selon la revendication 6, **caractérisé en ce que** la machine électrique formant moteur-générateur (EMG2) est une première machine électrique formant moteur-générateur, le premier compresseur (C1) et la première turbine (T2) étant montés sur un axe de la première machine électrique formant moteur-générateur (EMG2), et **en ce que** le deuxième turbocompresseur (TC2) comporte une deuxième machine électrique formant moteur-générateur (EMG1), laquelle comporte un axe sur lequel sont montés le deuxième compresseur (C2) et la deuxième turbine (T1).

9. Véhicule automobile comportant un système thermodynamique selon l'une des revendications 6 à 8.

## Patentansprüche

1. Verfahren zur Steuerung eines thermodynamischen Systems für Kraftfahrzeuge,
das System umfasst:
- einem ersten Turbolader (TC1) mit einer elektrischen Motor-Generator-Maschine (EMG2), einem ersten Kompressor (C1) und einer ersten Turbine (T2);
- einem zweiten Turbolader (TC2) mit einem zweiten Kompressor (C2) und einer zweiten Turbine (T1);
- zwei Brennkammern (CC1, CC2);
- einem mit dem ersten Kompressor (C1) und dem zweiten Kompressor (C2) verbundenen Flusskühler (IIC);
- ein mit dem zweiten Kompressor (C2) und einer ersten Brennkammer (CC1) verbundener Wärmerückgewinner (TR), der mit der zweiten Turbine (T1) verbunden ist, mit der zweiten Brennkammer (CC2) verbunden ist und mit der ersten Turbine (T2) verbunden ist;
Das System ist zur Durchführung eines Fluidflusses (F1) zwischen den verschiedenen Elementen konfiguriert.
das Verfahren umfasst:
- einen Aktivierungsschritt (E1) der elektrischen Maschine (EMG2) bis zum Erreichen einer jeweiligen minimalen Motordrehzahl (RPM2) für jedes der beiden Turbokompressoren (TC1, TC2);
- einen Einspritzschritt (E2) und eine Brennstoffverbrennung in der zweiten Brennkammer (CC2) bis zum Erreichen der Temperatur T3 am Eintritt der ersten Turbine (T2) von einer vorgegebenen Mindesttemperatur α (315);
- einen Schritt des Erhöhens (E3) der Eintrittstemperatur der zweiten Turbine (T1) und des Wärmerückgewinners (TR) bis zum Kippen der elektrischen Maschine (EMG2) in den Generatormodus (320) und zum Erreichen der Temperatur Tx am Ausgang des Rückgewinners (TR) in Richtung der ersten Brennkammer (CC1), minus einer vorbestimmten B (322);
- einem Einspritzschritt (E4) von Kraftstoff in den ersten Brennraum (CC1).

2. Steuerverfahren nach Anspruch 1, **dadurch gekennzeichnet, dass** der Schritt des Einspritzens (E4) von Kraftstoff in die erste Brennkammer (CC1) einen Teilschritt des Aktivierens (420) des Strömungskühlers (IC) umfasst.

3. Steuerverfahren nach Anspruch 1, **dadurch gekennzeichnet, dass** der Aktivierungsschritt (E1) der elektrischen Maschine (EMG2) einen Teilschritt der Aktivierung des Flusskühlers (IIC) umfasst.

4. Verfahren zur Ansteuerung nach einem der Ansprüche 1 bis 3, **dadurch gekennzeichnet, dass** dem Einspritzschritt (E4) von Kraftstoff in die erste Brennkammer (CC1) ein Parametereinstellschritt (E5) folgt, in dem die Eingangstemperaturen (T3", T3) der ersten Turbine (T2) und der zweiten Turbine (T1) wirkungsgesteuert werden über die in die zweite Brennkammer (CC2) bzw. in die erste Brennkammer (CC1) eingespritzte Brennstoffmenge (FUEL 2, FUEL 1) und/oder durch Temperaturregelung (T2') am Auslass des Strömungskühlers (IC) durch den Strömungskühler (IC).

5. Verfahren zur Ansteuerung nach einem der Ansprüche 1 bis 4, **dadurch gekennzeichnet, dass** jeweils vor mindestens einer Brennkammer (CC1, CC2) aus der ersten Brennkammer (CC1) und der zweiten Brennkammer (CC2), vorzugsweise einer elektrischen Heizkammer (EH2), jeweils stromaufwärts angeordnet ist mindestens der zweiten Brennkammer (CC2),
Verfahren mit mindestens einem Teilschritt (145; 314) der Erwärmung des in den mindestens einen Brennraum (CC2, CC1) einströmenden Gasstroms (F1) vor dem Kraftstoffeinspritzschritt (E2) in den zweiten Brennraum (CC2) und/oder vor dem Kraftstoffeinspritzschritt (E4) in den ersten Brennraum (CC1).

6. Thermodynamisches System mit:
- einem ersten Turbolader (TC1) mit einer elektrischen Motor-Generator-Maschine (EMG2), einem ersten Kompressor (C1) und einer ersten Turbine (T2),
- einem zweiten Turbolader (TC2) mit einem zweiten Kompressor (C2) und einer zweiten Turbine (T1),
- zwei Brennkammern (CC1, CC2),
- einem mit dem ersten Kompressor (C1) und dem zweiten Kompressor (C2) verbundenen Flusskühler (IC),
- einem mit dem zweiten Kompressor (C2) und einer ersten Brennkammer (CC1) verbundenen Wärmerückgewinnungsgerät (TR), das mit der zweiten Turbine (T1) verbunden ist, mit der zweiten Brennkammer (CC2) verbunden ist und mit der ersten Turbine (T2) verbunden ist,
System, das so konfiguriert ist, dass es einen Fluidstrom (F1) zwischen den verschiedenen Elementen ausführt, **dadurch gekennzeichnet, dass** es eine Steuervorrichtung umfasst, die so konfiguriert ist, dass sie das thermodynamische System gemäß den Schritten des Verfahrens nach einem der Ansprüche 1 bis 5 steuert.

7. Thermodynamisches System nach Anspruch 6, **dadurch gekennzeichnet, dass** der zweite Verdichter (C2) und die zweite Turbine (T1) sowie der erste Verdichter (C1) und die erste Turbine (T2) auf der Achse der elektrischen Motor-Generator-Maschine (EMG2) montiert sind.

8. Thermodynamisches System nach Anspruch 6, **dadurch gekennzeichnet, dass** die elektrische Motor-Generator-Maschine (EMG2) eine erste elektrische Motor-Generator-Maschine ist, wobei der erste Kompressor (C1) und die erste Turbine (T2) auf einer Achse der ersten elektrischen Motor-Generator-Maschine (EMG2) montiert sind, und dass der zweite Turbolader (CTC2) eine zweite elektrische Maschine aufweist Der Generator (EMG1) weist eine Achse auf, auf der der zweite Verdichter (C2) und die zweite Turbine (T1) gelagert sind.

9. Kraftfahrzeug mit einem thermodynamischen System nach einem der Ansprüche 6 bis 8.

## Claims

1. Steering process of a thermodynamic system for motor vehicles,
the system comprising:
- a first turbocharger (TC1) consisting of an electric machine forming an engine-generator (EMG2), a first compressor (C1) and a first turbine (T2);
- a second turbocharger (TC2) comprising a second compressor (C2) and a second turbine (T1);
- two combustion chambers (CC1, CC2);
- a flow cooler (IC) connected to the first compressor (C1) and the second compressor (C2);
- a thermal recuperator (TR) connected to the second compressor (C2) and a first combustion chamber (CC1), which is connected to the second turbine (T1), which is connected to the second combustion chamber (CC2), which is connected to the first turbine (T2);
the system being configured to implement a fluid flow (F1) between the various elements;
the process consisting successively of:
- an activation stage (E1) of the electric machine (EMG2), until the achievement of a respective minimum engine speed (RPM2) for each of the first and second turbocompressors (TC1, TC2);
- an injection (E2) and fuel combustion stage in the second combustion chamber (CC2) until the temperature "T3" at the inlet of the first turbine (T2), at a predetermined minimum temperature (315);
- an increase (E3) in the input temperature of the second turbine (T1) and the heat recovery (TR) until the electrical machine (EMG2) is switched in generator mode (320) and the temperature Tx is reached out of the recovery (TR) towards the first combustion chamber (CC1), at least a minimum free temperature predetermined (322);
- one fuel injection stage (E4) in the first combustion chamber (CC1).

2. Control process according to Claim 1, characterized that the fuel injection stage (E4) in the first combustion chamber (CC1) includes an activation substage (420) of the flow cooler (IC).

3. Control process according to Claim 1, characterized that the activation stage (E1) of the electric machine (EMG2) includes a substage of activation of the flow cooler (IC).

4. Control process according to one of the claims 1 to 3, **characterized by** the fuel injection stage (E4) in the first combustion chamber (CC1) followed by an adjustment stage (E5) of the parameters during which the input temperatures (T3", T3) of the first turbine (T2) and the second turbine (T1) are controlled by action on the quantity of fuel injected (FUTURE) EL 2, FUEL 1) in the second combustion chamber (CC2) and in the first combustion chamber (CC1) respectively, and/or temperature control (T2') at the flow cooler (IC) outlet by the flux cooler (IC).

5. Pilotage process according to one of the claims 1 to 4, characterized that an electric heater (EH1, EH2) is located upstream of at least one combustion chamber (CC1, CC2) from the first combustion chamber (CC1) and the second combustion chamber (CC2), respectively, preferably an electric heater (EH2) is located upstream of at least one second combustion chamber (CC2)),
the process involving at least one substage (145); 314) of heating of the gas flow (F1) entering at least one combustion chamber (CC2, CC1) before the fuel injection stage (E2) in the second combustion chamber (CC2) and/or before the fuel injection stage (E4) in the first combustion chamber (CC1).

6. Thermodynamic system comprising:
- a first turbocharger (TC1) comprising an electric machine forming an engine-generator (EMG2), a first compressor (C1) and a first turbine (T2),
- a second turbocharger (TC2) comprising a second compressor (C2) and a second turbine (T1),
- two combustion chambers (CC1, CC2),
- a flux cooler (IC) connected to the first compressor (C1) and the second compressor (C2),
- a thermal recuperator (TR) connected to the second compressor (C2) and a first combustion chamber (CC1), which is connected to the second turbine (T1), which is connected to the second combustion chamber (CC2), which is connected to the first turbine (T2),
the system being configured to implement a flow of fluid (F1) between the various elements, characterized as it includes a control device configured to control the thermodynamic system according to the process steps according to one of the claims 1 to 5.

7. Thermodynamic system according to claim 6, characterized as the second compressor (C2) and the second turbine (T1) as well as the first compressor (C1) and the first turbine (T2) are mounted on the axis of the electric machine forming engine-generator (EMG2).

8. Thermodynamic system according to claim 6, characterized as the electric machine forming engine-generator (EMG2) is a first electric machine forming engine-generator, the first compressor (C1) and the first turbine (T2) are mounted on an axis of the first electric machine forming engine-generator (EMG2), and the second turbo-compressor (TC2) includes a second electric machine forming engine-generator (EMG1)), which has an axis on which the second compressor (C2) and the second turbine (T1) are mounted.

9. Motor vehicle with a thermodynamic system according to one of the claims 6 to 8.
